# EUROPEAN PATENT APPLICATION

(11) **EP 4 299 270 A1**
(43) Date of publication of application: **03.01.2024**
(21) Application number: 22182686.0
(22) Date of filing: 01.07.2022
(51) Int. Cl.: B29B 17/02, C08J 11/08, B29K 27/00, B29K 105/00

(54) **METHOD FOR RECYCLING VINYL HALIDE POLYMER COMPOSITIONS AND USE THEREOF**

(71) Applicant: Vynova Holding S.A., 1313 Luxembourg (LU)
(72) Inventor: COLEMONTS, Christel, 3980 Tessenderlo (BE); LASUYE, Thierry, 62670 Mazingarbe (FR)
(74) Representative: Herzog IP Patentanwalts GmbH

(57) **Abstract**

Process of making a vinyl halide polymer comprising at least these steps: i) Providing: a plastic composition, wherein the plastic composition comprises the vinyl halide polymer and one or more additives; and a liquid organic phase; ii) Dissolving the plastic composition at least partially in the liquid organic phase, thereby forming a base composition; iii) Dividing the base composition into a first composition and a second composition; wherein the first composition has a higher content of additives than the second composition; and wherein the second composition has a higher content of the vinyl halide polymer than the first composition; wherein the dividing in step iii) is accomplished by a membrane. The disclosure relates further to a vinyl halide polymer obtainable by the process, an article comprising the vinyl halide polymer, a use of the vinyl halide polymer and uses of a membrane.

## Description

This invention relates to process of making a vinyl halide polymer comprising at least these steps: i) Providing: a plastic composition, wherein the plastic composition comprises the vinyl halide polymer and one or more additives; and a liquid organic phase; ii) Dissolving the plastic composition at least partially in the liquid organic phase, thereby forming a base composition; iii) Dividing the base composition into a first composition and a second composition; wherein the first composition has a higher content of additives than the second composition; and wherein the second composition has a higher content of the vinyl halide polymer than the first composition; wherein the dividing in step iii) is accomplished by a membrane. The invention relates further to a vinyl halide polymer obtainable by the process, an article comprising the vinyl halide polymer, a use of the vinyl halide polymer and uses of a membrane.

More specifically, the present invention relates to a recovery of vinyl halide polymers such as PVC from plastic waste which is mixtures, composites of various polymers and possibly further materials or polymer blends.

Most of today's processes to recover or recycle vinyl halide polymer compositions are based on mechanical or chemical processes, as well as combinations of the two. It is clear that mechanical recycling has its merits, but also its limitations.

Other, more chemical recycling methods include chemical and thermal depolymerisation. These methods are promising, but suffer from low yields, high energy consumption and solvent-based purification (dissolution-precipitation), which dissolves the polymer to separate it from its additives.

Solvent-based purification is an interesting intermediate solution, as it allows to produce a near-virgin quality polymer, without the energy need of cracking the polymer. Moreover, it the additives and the polymer remain intact, so creating a whole range of by-products is avoided which is quite common when chemically recycling the polymer.

Scientific literature is still rather scarce, but there are several pilot scale initiatives which use a solvent-based purification approach, such as the VinyLoop^{®} process, which has been designed for the treatment of PVC-rich materials, primarily soft PVC insulation from electric cables. These waste materials are being fed to the recycling process, resulting in recycled PVC granules. The process is based on the dissolution in an organic solvent, methyl ethyl ketone, with an evaporation-based precipitation of the polymer. To the knowledge of the inventor, this is the most advanced process using solvent-based purification. Further, technical feasibility has been proven in a plant in Fer-rara (Italy). Moreover, a validated Life Cycle Analysis study proved the significant reduction in environmental impact, whereby the primary energy demand of the recycled PVC was 46% lower, water-use was 76% lower and the Global warming potential 39% lower, if compared to virgin PVC produced by the conventional route. Nevertheless, the pilot plant had to close its operation in 2018. The primary reason was the increasing product regulation for PVC, and more specifically the REACH classification of the PVC plasticizer di-(2-ethylhexyl) phthalate. The pilot plant was not able to remove such additives successfully in an economically feasible way, stressing the need of a more efficient additives removal step.

Another well-known process is the so-called Creasolv^{®} process developed by Fraunhofer IVV in Germany. This process is designed for the recycling of a variety of different material components of films, plastics, textiles, with a special focus on the recycling of polystyrenes, polyesters, and recently also polyolefins, e.g. to recover polyethylene from multilayers. The overall process is typically based on (1) the dissolution of the waste polymeric material (containing the additives) in a solvent, and (2) recovering the purified polymer by the addition of an anti-solvent for the polymer, thus inducing its precipitation while keeping the unwanted additives in solution. The process is claimed to be ecologically friendly, but the details of the solvent/antisolvent are kept trade secret. Further, a Creasolv^{®} process has been designed for the removal of the flame retardant hexabromocyclododecane (HBCD), a persistent organic pollutant and banned since 2015, from polystyrene. This flame retardant is especially present in expandable polystyrene foam applications for insulation ("Styrofoam"), hampering their mechanical recycling.

A (partial) solution to this problem was offered by the a modified Creasolv^{®} process which is known as "Poly-StyreneLoop". This process was developed into a pilot plant for extractive removal of HBCD from strictly collected polystyrene (PS) waste. After the solvent extraction and multiple purification unit operations, this process produces recycled PS of an acceptable grade. However, further implementation was stalled due to insolvency of the plant consortium.

There are further initiatives like the so-called PureCycle technology by Procter & Gamble to purify polypropylene at very high temperatures and APK's Newcycle technology to separate PE from PE/PA mixtures.

However, all these initiatives struggle to make the process efficient to remove additives sufficiently in a cost-effective way.

### OBJECT

An object of the invention is to overcome at least one of the above challenges at least partially.

An object of the invention is to provide a process for the recycling of vinyl halide polymers which is compliant also with strict regulations, such as REACH.

An object of the invention is to provide a process for the recycling of vinyl halide polymers in a compliant way, though the vinyl halide polymer comprises regulated additives.

An object of the invention is to provide process more efficient to remove additives from plastic compositions comprising vinyl halide polymers, e.g., like poly vinyl chloride.

Another object of the invention is to provide a modified or alternative process more efficient to remove legislated additives, e.g. phthalates and lead salts, from plastic compositions comprising vinyl halide polymers, e.g., like poly vinyl chloride.

Another object of the invention is a process for the recycling of vinyl halide polymers which is flexible.

Another object of the invention is a process for the recycling of vinyl halide polymers which can be used with a wide range of vinyl halide polymers.

Another object of the invention is a process for the recycling of vinyl halide polymers which can be used with vinyl halide polymers having a broad range of additives.

Another object of the invention is a process for the recycling of vinyl halide polymers in which the vinyl halide polymers come from a wide range of origins.

Another object of the invention is a process for the recycling of vinyl halide polymers in which organic additives to the vinyl halide polymer are effectively removed.

Another object of the invention is a process for the recycling of vinyl halide polymers in which inorganic additives to the vinyl halide polymer are effectively removed.

Another object of the invention is a process for the recycling of vinyl halide polymers in which organic and inorganic additives to the vinyl halide polymer are effectively removed.

Another object of the invention is a process for the purification of vinyl halide polymers in which additives to the vinyl halide polymer are removed to content of less than 1'000 ppm per additive.

Another object of the invention is a process for the recycling of vinyl halide polymers in which organic and inorganic additives to the vinyl halide polymer are effectively and simultaneously removed.

Another object of the invention is a process for the recycling of vinyl halide polymers in which organic and inorganic additives to the vinyl halide polymer are both removed in a single process step.

Another object of the invention is a process for the recycling of vinyl halide polymers in which highly purified vinyl halide polymers are obtained.

Another object of the invention is a process for the recycling of vinyl halide polymers in which the recycling gives highly purified vinyl halide polymers.

Another object of the invention is a process for the recycling of vinyl halide polymers which comprises a closed solvent loop.

Another object of the invention is a process for the recycling of vinyl halide polymers suited to process high volumes of vinyl halide polymer comprising materials.

Another object of the invention is a process for the recycling of wire insulation and window frames from buildings.

Another object of the present invention is to provide a method of continuously removing the vinyl halide insulation from insulated wire scrap.

Another object of the present invention is to provide a method for the selective recovery of vinyl halide insulation from insulated wire scrap wherein the insulated wire scrap contains numerous other organic insulation materials.

Another object of the present invention is to provide a method for the selective recovery of vinyl halide insulation from building parts wherein the building parts contains numerous other organic insulation materials.

Another object of the present invention is to provide a method of selectively recovering vinyl halide insulation suitable to be reused as electrical insulation from insulated wire scrap containing a combination of vinyl halide, polyolefins, rubber and other organic insulating materials.

Another object of the present invention is to provide a method of selectively recovering vinyl halide polymer suitable to be reused as window frames and the like from worn window frames etc. containing a combination of vinyl halide, polyolefins, rubber and other organic insulating materials.

Another object of the present invention is to provide a method of recovering vinyl halide insulation material from scrap plastic items in fragmented small pieces for recycling into an extrusion coating device or the like for insulating wire and or window frames and the like.

Another object of the present invention is to provide a method of recovering usable metal and usable vinyl halide insulation from scrap insulated wire which does not pollute. Another object of the invention is a process for the recycling of vinyl halide polymers which is economically less expensive.

Another object of the invention is a process for the recycling of vinyl halide polymers which produces less waste than those of the prior art.

Another object of the invention is an article which comprises at least in part a recycled vinyl halide polymer.

Another object of the invention is a membrane suited for purifying a vinyl halide polymer from additives.

Another object of the invention is a membrane suited for removing additives from vinyl halide polymers.

Another object of the invention is a membrane for treating a liquid phase comprising vinyl halide polymers.

### SUMMARY OF THE INVENTION

The inventors have found that membranes are suited to purify used vinyl halide polymers by separating the vinyl halide polymers from additives and the like. This can be done efficiently when dissolving the polymers in a solvent or solvents mixture prior to contacting with the membrane and by removing the solvent afterwards to obtain a solidified purified vinyl halide polymer.

### GENERAL

In the description, range specifications also include the values mentioned as limits. A specification of the type "in the range from X to Y" with respect to a quantity A consequently means that A can assume the values X, Y and values between X and Y. One-sided limited ranges of the kind "up to Y" for a size A mean accordingly as values Y and smaller than Y.

All numeric values and ranges mentioned in this description are meant to be "about" the value or range. The term "about" means that the value or range needs not to be met with absolute accuracy. "About" means that the numerical value or range can be hit exactly, but further includes a range of about +/- 2 %, based on the referenced value or endpoints of ranges. "About" also includes the exact values as a preferred embodiment. For example, a range mentioned to be from 20 to 80 could have its one end between 19.96 and 20.04, with the exact value of 20.00 being preferred Similarly on the other end, it can mean any value between 78.4 and 81.6, with the exact value of 80.0 being preferred. Accordingly, this range could go from 19.96 to 81.6, or from 19.96 to 78.4, and so forth.

### DEFINITIONS

1 Dalton (1 Da) is a unit of mass equal to 1 g/mol, and a 1 kDa equals to 1 kg/mol and 1'000 g/mol. 1 MDa is 1'000'000 Da or 1'000'000 g/mol.

1 Å, or 1 Ångström is a unit of length equal to 0.1 nm, or 10⁻¹⁰ m.

The molecular weight cut-off (MWCO) of a membrane gives the molecular weight of a dissolved polymer, at which 90 % of the amount of the dissolved polymer is retained by the membrane. For commercial membranes, the MWCO is determined by testing polystyrene dissolved in toluene when referring to organic solvents, or Dextran dissolved in water for the aqueous systems.

For example, a sample of a polystyrene with a broad and homogeneous molecular weight distribution is dissolved in toluene giving a sample solution. The sample solution is subjected to a membrane filtration. Both, the sample solution and the permeate which has passed the membrane are characterized using GPC (gel permeation chromatography) with a refractive index detector. This GPC was calibrated with narrow-PDI polystyrene standard model polymers running toluene as solvent. The MWCO is determined by identifying the point at which 90% of the dissolved polymer has passed the membrane. Usually, the MWCO is given by the supplier as part of the technical properties of commercial membranes.

The term "has less lead" refers to the presence of lead in elemental form or as an ion. Usually, it is present as an ion of a lead salt or lead containing additive.

### EMBODIMENTS OF THE INVENTION

A contribution to the at least partial achievement of at least one of the aforementioned objectives is provided by the subject-matter of the independent claims. The dependent claims provide preferred embodiments that contribute to the at least partial achievement of at least one of the objectives.
|1| A process of making a poly vinyl halide polymer comprising at least these steps:
   i) Providing:
      a plastic composition, wherein the plastic composition comprises at least 10 wt.% of the vinyl halide polymer and one or more additives; and
      a liquid organic phase;
   ii) Dissolving the plastic composition in the liquid organic phase at least partially, thereby forming a base composition;
   iii) Dividing the base composition into a first composition and a second composition;
      wherein the first composition has a higher content of additives than the second composition; and
      wherein the second composition has a higher content of the vinyl halide polymer than the first composition;
      wherein the dividing in step iii) is made by a membrane.
|2| The process of embodiment 1, further comprising this step:
   iv) Splitting the second composition into a solid phase comprising the vinyl halide polymer and a recovered organic phase;
   whereby the vinyl halide polymer has lower content of additives than the plastic composition.
|3| The process of embodiment 1 or 2, further comprising this step:
   v) Splitting the first composition into a solid or liquid phase comprising the additives and a recovered organic phase via nanofiltration.
|4| The process of any one of the preceding embodiments, wherein the organic phase in step i) comprises at least 50 wt.% of a solvent selected from the group consisting of ketones, ethers, aromatics, halogenated solvents, DMF and DMSO, the wt.% based on the total amount of the organic phase.
|5| The process of any one of the preceding embodiments, wherein the additives have a molecular weight of 5 kDa or less.
|6| The process of any one of the preceding embodiments, wherein step ii) is done at a temperature in the range from 20 °C to 150 °C.
|7| The process of any one of the preceding embodiments, wherein a mixing device is used in step ii).
|8| The process of any one of the preceding embodiments, wherein the membrane has a molecular weight cut-off, also referred-to as MWCO, in a range from 500 to 20 kDa.
|9| The process of any one of the preceding embodiments, wherein the base composition is under a pressure in the range from 2 to 100 bar, the pressure given as gauge pressure.
|10| The process of any one of the preceding embodiments, wherein the process is operated as a continuous process.
|11| The process of embodiment |10|, wherein the process has throughput in step iii) of at least 0.5 L/m²/h/bar.
|12| The process of any one of the preceding embodiments, wherein the membrane comprises at least one polymer selected from the group consisting of polyolefine, polysulfone, polyethersulfone, fluoro polymer, polystyrene, polyimide, poly(vinylidene fluoride), cellulose, cellulose nitrate, cellulose acetate, poly(acrylonitrile), poly(vinyl alcohol), poly (methacrylic acid), poly (methacrylic acid ester), poly(arylene ether ketone), poly(ether imide), polyaniline nanoparticles, poly(arylene ether sulfone) Polyether ether ketone, fluoro polymer, polypiperazinamide and polyethersulfone amide, and combinations thereof, such as, e.g., copolymers, blends and composites.
|13| The process of any one of the preceding embodiments, wherein the membrane comprises at least one ceramic.
|14| The process of any one of the preceding embodiments, wherein the membrane is conditioned, coated, impregnated and/or functionalized.
|15| The process of any one of the preceding embodiments, wherein at least a part of the membrane in step iii) is surrounded on its both sides by the liquid organic phase.
|16| The process of any one of embodiments 2 to 10, wherein the splitting of the composition is made/achieved by a technique selected from the group consisting of precipitation, distillation, centrifugation, freeze drying, removal of organic phase in vacuo, flash drying, fluid bed drying, and stripping.
|17| The process of any one of the preceding embodiments, wherein the organic phase is at least partially removed from the first composition, from the second composition or from both, whereby a recovered organic phase is obtained.
|18| The process of any one of the preceding embodiments, wherein the recovered organic phase is at least partially reused by providing as liquid organic phase in step i).
|19| The process of any one of the preceding embodiments, wherein the liquid organic phase in step i) comprises an amount of at least 90 wt.% of recovered organic phase.
|20| The process of any one of the preceding embodiments, wherein the vinyl halide polymer is obtained in solid state.
|21| The process of any one of the preceding embodiments, wherein the vinyl halide polymer comprises less than 1 wt.% of organic solvent.
|22| The process of any one of the preceding embodiments, wherein the vinyl halide polymer comprises less than 1'000 ppm of additives, with respect to each additive.
|23| The process of any one of the preceding embodiments, wherein the additives are selected from inorganic and organic compounds.
|24| The process of any one of the preceding embodiments, wherein the organic phase in step i) comprises less than 40 wt.% of water, based on the total amount of organic phase.
|25| The process of any one of the preceding embodiments, wherein vinyl halide polymer has at least 10 -times less additives, per additive substance, than the plastic composition.
|26| The process of any one of the preceding embodiments, wherein vinyl halide polymer has at least 10 -times less lead than the plastic composition.
|27| The process of any one of the preceding embodiments, wherein vinyl halide polymer has at least 10 times less DEHP than the plastic composition.
|28| A vinyl halide polymer obtainable by a process according to any of the preceding embodiments |1| to |27|.
|29| The vinyl halide polymer according to embodiment |28| comprising less than 1'000 ppm of additives, with respect to each additive.
|30| An article comprising a vinyl halide polymer obtainable by the process according to any one of embodiments |1| to |27|.
|31| The article according to embodiment |30|, wherein the article is selected from the group consisting of a fiber, a filament, a textile, a film and a formed body, such as pipe, tube or profile, or an object of more complex geometrical shape.
|32| Use of the vinyl halide polymer in an article, wherein the vinyl halide polymer is obtained by the process according to any one of embodiments |1| to |27|.
|33| Use of a membrane for removing additives from an organic liquid comprising at least one vinyl halide polymer.
|34| Use of a membrane for improving the purity of at least one vinyl halide polymer.
|35| Use of a membrane for treating a liquid organic phase comprising at least a vinyl halide polymer.

### DETAILED DESCRIPTION OF THE INVENTION

A first aspect of the invention is a process of making a poly vinyl halide polymer comprising at least these steps:
i) Providing:
   a plastic composition, wherein the plastic composition comprises at least 10 wt.% of the vinyl halide polymer and one or more additives; and
   a liquid organic phase;
ii) Dissolving the plastic composition in the liquid organic phase at least partially, thereby forming a base composition;
iii) Dividing the base composition into a first composition and a second composition;
   wherein the first composition has a higher content of additives than the second composition; and
   wherein the second composition has a higher content of the vinyl halide polymer than the first composition;
   wherein the dividing in step iii) is made by a membrane.

The plastic composition can be of any kind known to a skilled person and considered potentially useful for providing in the present process. The plastic composition is often composed of materials and items which were disposed as waste before. So, the present process could be seen as a recycling of vinyl halide polymers and items comprising one or more vinyl halide polymers. The plastic composition is usually composed of solid components. Prior use of these items can be packaging of food, beverages, non-food, liquids, solids and all kinds of other tradable goods. Also, these items can be packaging of construction materials and even construction materials itself, like windows and doors with plastic frames, pipe, flooring, rigid films, profile, sidings, ceilings, medical and food film, medical articles, tubes , bottles, fittings, shoe soles, cables, and so on.

More specifically, the plastic composition comprises at least 10 wt.% of vinyl halide polymer, i.e. of one, or a combination of two or more vinyl halide polymers. Accordingly, when the term "vinyl halide polymer" used throughout this description refers to a single vinyl halide polymer, as well as to a combination of two or more vinyl halide polymers. This simplification is made to enhance the legibility of the present text.

For example, the plastic composition comprises vinyl halide polymer at least 15, 20, 25, 30, 35, 40, 45, 50, 55, 60, 65, 70, 75, 80, 85 or 90 wt. %, the wt.% with respect to the total plastic composition. For example, the plastic composition may comprises vinyl halide polymer in a range from 15 to 99, 20 to 99, 25 to 99, 30 to 99, 35 to 99, 40 to 99, 45 to 99, 50 to 99, 55 to 99, 60 to 99, 65 to 99, 70 to 99, 75 to 99, 80 to 99, 85 to 99, or 90 to 99, or in a range from 15 to 95, 20 to 95, 25 to 95, 30 to 95, 35 to 95, 40 to 95, 45 to 95, 50 to 95, 55 to 95, 60 to 95, 65 to 95, 70 to 95, 75 to 95, 80 to 95, 85 to 95, or 90 to 95, or in a range from 15 to 90, 20 to 90, 25 to 90, 30 to 90, 35 to 90, 40 to 90, 45 to 90, 50 to 90, 55 to 90, 60 to 90, 65 to 90, 70 to 90, 75 to 90, 80 to 90 or 85 to 90, the values and ranges all given as wt.%, the wt.% with respect to the total plastic composition. The remainder in the plastic composition to 100 wt.% is composed of further constituents.

The vinyl halide polymer can be of any kind known to and considered suited to be employed in the present invention. The vinyl halide polymers include the homopolymers and copolymers of vinyl halides including, for example, vinyl chloride and vinyl bromide. The term vinyl halide polymers comprise also copolymers of different vinyl halides with each other or copolymers of a vinyl halide with one or more polymerizable olefinic monomers having at least one terminal CH₂=C< group.

As examples of such olefinic monomers, there may be mentioned the alpha, beta-olefinically unsaturated carboxylic acids such as acrylic acid, methacrylic acid, ethacrylic acid, alpha-cyanoacrylic acid, etc.; esters of acrylic acid such as methylacrylate, ethylacrylate, butylacrylate, octylacrylate, cyanoethylacrylate, etc.; esters of methacrylic acid such as methylmethacrylate, butylmethacrylate, etc.; nitrile such as acrylonitrile, methacrylonitrile, etc.; acrylamides such as methylacryl-amide, N-methylol acrylamide, N-butoxy methylacrylamide, etc.; vinyl ethers such as ethyl vinyl ether, chloroethyl vinyl ether, etc.; the vinyl ketones; styrene and styrene derivatives such as methyl styrene, vinyl toluene, chlorostyrene, etc.; vinyl naphthalene; esters such as allyl or vinyl chloroacetate, vinyl acetate, etc.; vinyl pyridene; methyl vinyl ketone; the diolefins, including butadiene, isoprene, chloroprene, etc.; and other polymerizable olefinic monomers of the types known to those skilled in the art.

Accordingly, there may be mentioned as well suited vinyl halide polymers polyvinylchloride (PVC), PVC-copolymers such as PVC-co-vinyl acetate polymer, chlorinated PVC, polyvinylidene-co-PVC-polymer, impact modified PVC, and more complex copolymers like PVC/PCTFE-PVDC (sold as Aclar by Honeywell or Kel-F by 3M, Inc.).

The vinyl halide polymers particularly useful in the present invention are homopolymers and copolymers made by the polymerization of vinyl chloride alone or in admixture with one or more polymerizable olefinic monomers copolymerizable therewith. The most preferred vinyl polymer, or resin, is polyvinylchloride (PVC) homopolymer produced by mass polymerization or suspension polymerization. However, it is well understood that the invention may be applied to others of the above-described polymers, and is not limited in any way.

Further constituents of the plastic composition polymers different from vinyl halide polymers, additives, contamination or dirt, or a combination of two or more thereof.

The number of additives and contaminants is illimited, and any one or more of these can be present. The additives can be categorized by structural features as well as by function.

For example, additives present in the plastic composition can be antioxidants like UV stabilizers and flame retardants; rheological modifiers like softeners and plasticizers like epoxidized soy bean oil for the manufacturing of items or for the vinyl halide polymer after manufacture, e.g. during use; antioxidants; antistatic agents; heat stabilizers; lubricants and slipping agents; fillers; colorants, pigments and dyes; impact modifier like e.g. polyacrylate core shell impact modifiers and chlorinated polyethylene impact modifier; processing aids, e.g. chlorinated paraffine polyacrylates; blowing agents; antifog agents and biocides.

Based on structural features, additives can be organic, inorganic or hybrid; hybrid means having features of both organic and inorganic.

A group of more focused inorganic additives are lead compounds, i.e. salts and/or complexes comprising lead (Pb). Some of these are heat stabilizers and/or flame retardants. Examples of inorganic additives possibly present in vinyl halide polymer containing compositions are salts of Pb, Cd, Ca, Zn, Ba, and Sn, Ti and combinations thereof. These inorganic additives are often used as heat stabilizers, UV stabilizers, and fillers.

The organic additives can serve a wide range of duties, for example, as plasticizers and heat stabilizers.

Examples of organic additives are carboxylates of heavy metals, such stearates of lead, calcium, barium and zinc; octoates of calcium, barium and zinc; dialkyltin laurate, - maleate and bis(isooctylthioglycollate); lead phthalate; lead maleate; dialkylphthalates and mixed aliphatic-aromatic phthalates; trialkyl mellitates; dialkyl adipates and sebacates. Two of the most known additives from this group are Di(2-ethylhexyl)-phthalate and normal and dibasic lead stearate, tribasic lead phthalate.

The liquid organic phase can be of any kind known to and considered possibly useful by a skilled person to dissolve the plastic composition. The liquid organic phase comprises at least one, optionally a combination of two or more constituents. Main constituents of the liquid organic phase are organic solvents. The organic solvents forming the combination are miscible in each other, by preference. The liquid organic phase may contain further constituents, different from aforementioned organic solvents.

The liquid organic phase comprises at least one solvent selected from a group of solvent types consisting of ketones, ethers, aromatics, halogenated solvents, dimethylformamide (DMF) and Dimethyl sulfoxide (DMSO), or a combination of two or more solvents, either from the same or different solvent types. Examples of preferred solvent types are ketones and ethers.

Solvents of the solvent types ketones, ethers and halogenated solvents can be either aliphatic or aromatic. The aliphatic ones can be acyclic or cyclic. Possibly, the solvent may comprise more than a single carbon cycle. Moreover, a cyclic solvent may have one or more heteroatoms in its cycle, i.e. an atom or atoms which are structural part of the cycle but not carbon (-C-).

Some examples of acyclic ketones are ethyl methyl ketone, diethyl ketone, methyl isobutyl ketone, methyl isoamyl ketone and di-(isobutyl) ketone.

Some examples of cyclic ketones are cyclopentanone, cyclohexanone, cycloheptanone and isophorone.

Some examples of cyclic ethers are tetrahydrofuran, 2-methyl tetrahydrofurane and 1,4 dioxane.

Some examples of aromatics are Toluene and xylene.

Chlorinated solvents are usually another choice when thinking of halogenated solvents. Some examples of halogenated solvents are dichloromethane, methylene chloride, 1,1-dichloreoethylene, Ethylene dichloride, chloroform, 1,1-dichloroethane, trichloroethylene, carbon tetrachloride, chlorobenzene, o-dichlorobenzene.

Turning to the process of the invention, step i) is providing both, the plastic composition and the liquid organic phase. Providing may be accomplished by any means and techniques known to and considered suited in the present process by a skilled person. For example, providing may be placing both, the plastic composition and the liquid organic phase, in a vessel, like a beaker, a pot, a round bottom flask, a mixer and the like. In principle, both components, i.e. the plastic composition and the liquid organic phase can be placed at the same time or one after another, or the first at once, and the second component in multiple portions.

Step ii) is dissolving the plastic composition in the liquid organic phase at least partially, whereby a base composition is formed.

Agitation can be used to speed up and/or assist the dissolution in step ii). Agitation may be made by all means and techniques known to and considered suited in the present process by a skilled person. For example, a mechanical stirrer can be used in order to stir the plastic composition and the liquid organic phase during step ii). Another way to accomplish agitation may be applying a stream of gas. For example, air could be bubbled from the bottom of a vessel used in step ii) and through the mix of liquid organic phase and plastic composition. Or a jet of air could be pressed through a nozzle in the vessel's wall.

The base composition obtained from step ii) can be homogenous and purely liquid, or heterogenous, i.e. a liquid with some undissolved yet solid remainder. Ideally, all of the vinyl halide polymer originally present in the plastic composition has dissolved into the liquid organic phase at this stage. In case of being heterogeneous, it might be advantageous to remove the solid remainder from the base composition to obtain a homogenous base composition. Removal of the solid remainder can be accomplished by any means and techniques known to and considered suited in the present process by a skilled person. For example, by passing the base composition through a filter of a sieve. One might also remove the solid remainder by decantation provided that the solid remainder swims on the surface or sinks to the bottom of the base composition, i.e. the density of the solid remainder is less or larger than the density of the base composition.

The base composition is then divided into a first composition and a second composition. The aim is to concentrate the vinyl halide polymer in one of the first or the second composition, and the further constituents in the other. For the purpose of the presentation of the invention, the composition which has the higher vinyl halide polymer content is described as the "second composition", and the composition having a lower content of vinyl halide polymer is the "first composition". The terms "lower" and "higher" in this context refer to the relative content of vinyl halide polymer when comparing the first and the second composition. For example, 60 wt.% of vinyl halide polymer in a sample is a higher content that 40 wt.% of vinyl halide polymer.

In a preferred variant of the invention, step ii) is performed at a temperature in the range from 20 °C to 150 °C, for example at a temperature in the range from 35 to 55°C, from 60 to 90 °C, or from 100 to 120 °C. The temperature depends on the constituents of the liquid organic phase. The temperature may be chosen not to exceed the boiling point bpₘᵢₙ of the constituent in the liquid organic phase, which is lowest, amongst all the constituents composing the liquid organic phase. It is preferred to choose the temperature for step ii) in the range from 60 to 90 %, or from 70 to 95%, the % in all cases relative to bpₘᵢₙ. For example, if the liquid organic phase is composed of ethyl methyl ketone (MEK) being the constituent of the liquid organic phase having the lowest boiling point, then bpₘᵢₙ is the boiling point of MEK, which is 79,6 °C. Then, step ii) is preferably performed at a temperature in the range from 0,6^{∗}bpₘᵢₙ to 0,9^{∗}bpₘᵢₙ, which is in the range from 47,8 and 71,6 °C.

Another, preferred variant of the invention is to perform step ii) at a temperature above the boiling point of the liquid organic phase, and in case of a solvent mixture above the boiling point bpₘᵢₙ of the constituent to the liquid organic phase which has the lowest boiling point amongst all constituents composing the liquid phase. For example, the temperature in step ii), and optionally step iii) could be up to 50 °C higher than the boiling point, or up to 40, 30, 20, or 10 to 50, 15 to 50, 20 to 50, or 20 to 45, 20 to 40 °C higher than the boiling point.

In that event, step ii), and optionally step iii) may be operated under pressure. For example, between 1 and 50 bars above ambient pressure, or 1 to 40, 1 to 35, 1 to 30, 1 to 25, 1 to 20, or 5 to 40, 5 to 35, 5 to 30, 5 to 25, or 10 to 40, 10 to 35, or 15 to 40, 15 to 35, or 20 to 50, 20 to 45, 20 to 40 bars above ambient pressure.

According to the invention, the dividing in step iii) is made by a membrane. A membrane in the present context is a selective barrier. That is, it allows some constituents to pass through but stops others. Such constituents of the base composition may be molecules, ions, or other small particles.

In the present invention, the membrane is used as a selective barrier for vinyl halide polymer in a liquid organic phase. The vinyl halide polymer is supposed to be retained in the liquid organic phase while other constituents of the liquid organic phase are supposed to pass through the membrane. The part of the liquid organic phase which is retained by the membrane is described as the "second composition" for the purpose of the present invention. This is also referred to as "concentration step", from the view of retaining the vinyl halide polymer.

The dividing in step iii) can be achieved by a single membrane separation step, or by a sequence of multiple membrane separation steps. That is, when another dividing of the second composition with a further membrane into a sub-second and a sub-first composition and so on is made. In this event, it is preferred to combine all second compositions in the end to form a "final" second composition, and to combine all first compositions in the end to form a "final" first composition. Accordingly, the second composition has concentrated the vinyl halide polymer while the first composition has concentrated the further constituents.

The vinyl halide polymer usually has a molecular weight of at least 5 kDa. For example, the vinyl halide polymer has a molecular weight of at least 7 kDa, or at least 10 kDa, or at least 15 kDa, or at least 20 kDa, or at least 25 kDa, or at least 50 kDa. For example, the vinyl halide polymer has a molecular weight in the range of 5 kDa to 150 kDa, or from 5 kDa to 120 kDa, or from 10 kDa to 100 kDa, or from 10 kDa to 80 kDa.

The molecular weight of the vinyl halide polymer in this context is the so-called number-averaged molecular weight, also identified as *M̅n̅* or simply Mₙ. The values of *M̅n̅* mentioned here are determined with GPC according to and under observation of the further conditions detailed in the section "test methods". It is common knowledge that the molecular weight information given here is relative to the calibration standard and test conditions employed. Other analytical methods and/or deviation from the testing protocol given in the test method are likely to result in other values for molecular weight. Further it is known that this GPC usually has a cut-off around 500 Da. Constituents of less than this molecular weight cannot be analyzed.

The further constituents to the base composition, the so-called additives have a molecular weight of less than 5 kDa. For example, the further constituents have a molecular weight of less than 4kDa, less than 3kDa, less than 2kDa or less than 1kDa. Very often, the further constituents have a molecular weight of at least 80 Da. The molecular weight of the further constituents can be calculated based on the molecular weight of the composing atoms.

One characteristic feature of a membrane to retain polymers is the so-called molecular weight cut-off (MWCO). The MWCO value is, at which 90 %, by weight, of certain oligomers or polymers having the indicated *M̅n̅* or above are retained by the membrane. The MWCO value of a polymer can vary depending on the solvent employed for dissolving the polymer, and temperature and external pressure applied to the solution. Accordingly, the MWCO is determined with regard to a reference polymer dissolved in a reference solvent and under further standardized conditions.

In a preferred embodiment of the present invention, the MWCO of the membrane is in the range from 3 kDa to 50 kDa, for example 5'000 Da, or 7'500 Da, or 10'000 Da, or 15'000 Da, or 20'000 Da, or 25'000 Da, or 30'000 Da.

Further, the base composition may be under a pressure in the range from 2 to 100 bar to improve speed of step ii). For example, the pressure could be from 5 to 40 bar, or from 5 to 35 bar, from 5 to 30 bar, from 5 to 25 bar, from 5 to 20 bar, or from 10 to 35 bar, from 10 to 30 bar, from 10 to 25 bar, from 10 to 20 bar, or from 15 to 35 bar, from 15 to 30 bar, from 15 to 25 bar, from 15 to 20 bar, the pressure in each case given as gauge pressure. Gauge pressure is defined to be the pressure difference between the pressure applied and atmospheric pressure. For the sake of completeness, the gauge pressure equals to the absolute pressure - 1 bar. Absolute pressure is the pressure above of having no matter inside a space, i.e. a perfect vacuum.

Another characteristic feature of step iii) with a membrane is a so-called pressure drop. Pressure drop is defined as the difference of pressure between both sides of a membrane in proper working conditions. The pressure drop of a membrane used with the invention can be in the range from 1 to 50 bar, 1 to 40 bar, 5 to 40 bar, 10 to 40 bar, 20 to 40 bar or 10 to 30 bar, 10 to 35 bar, 10 to 40 bar. In an embodiment of the invention, one side of the membrane is under ambient pressure during operation.

The membrane employed in step iii) can be of any kind known to and considered for use in the present invention by a skilled person. For example, the membrane may comprise at least one polymer selected from the group consisting of polyolefine, polysulfone, polyethersulfone, fluoro polymer, polystyrene, polyimide, poly(vinylidene fluoride), cellulose, cellulose nitrate, cellulose acetate, poly(acrylonitrile), poly(vinyl alcohol), poly (methacrylic acid), poly (methacrylic acid ester), poly(arylene ether ketone), poly(ether imide), polyaniline nanoparticles, poly(arylene ether sulfone) Polyether ether ketone, fluoro polymer, polypiperazinamide and polyethersulfone amide, and combinations thereof, such as, e.g., copolymers, blends and composites.

In another variant, the membrane may comprise a ceramic. These membranes are more from metal oxides such as alumina, zirconia, titania or mixed oxides. A top layer of a polymer with hydrophobic groups may be grafted on the ceramic membrane to enhance organic solvent flux.

Preparation and usage of membranes for separation purposes is quite known to a skilled person, see P. Marchetti et al., "Molecular Separation with Organic solvent Nanofiltration: A critical review", in Chemical Reviews, 2014, 114, 10735 - 10806.

Further, the membrane forming polymer may be conditioned, impregnated and/or functionalized.

It is quite common to condition a membrane. When delivered, a membrane is often stored in a storage liquid, e.g., water. The storage liquid is usually a non-solvent to the membrane. Prior to use, the membrane may be conditioned. That is, the membrane is transferred from the storage liquid to an organic solvent, herein called conditioning solvent, which is at least to an extent compatible with both the storage solvent and the liquid organic phase. Common conditioning solvents are polar organic solvents, e.g., single- or polyvalent alcohols like ethanol, diethylene glycol, glycerol and so on, and combinations thereof.

Impregnated means that a membrane is exposed to a liquid which is adsorbed at least in part by the membrane or by a component to the membrane.

Membranes of the invention may have a thickness in the range from 5 to 100, or 10 to 100, or 20 to 80, 30 to 70, 40 to 80, 40 to 90, or 40 to 100 µm, by preference. The thickness of a membrane can be determined using Scanning electron microscopy (SEM).

Membranes of the invention may have a pore size in the range from .. 5 to 5'000 Å, for example 5 to 50, 5 to 30, 5 to 20, 5 to 10, or 10 to 50, 10 to 40, 10 to 30 or 10 to 20 Å by preference. The pore size of a membrane can be determined by Scanning electron microscopy (SEM) or Transmission electron microscopy (TEM).

An example of a commercial membrane found suited to be used in the present invention is ETNA10PP (MWCO 10 kDa, available from Alfa-Laval in Glinde, Germany). It is made of a composite fluoro polymer.

In a preferred embodiment of the process of the invention the membrane in step iii) is surrounded at least on one, or on its both sides by the liquid organic phase. In another embodiment, a part of the membrane in step iii) may be at least partially not in contact with the liquid phase on at least one, or both sides. For example, up to 10 %, based on the passable membrane surface, is not in contact with the liquid organic phase on at least on side of the membrane.

Further, the process of the present invention may have a throughput in step iii) of at least 0.5 L/m²/h/bar, for example in a range from 0.5 to 100 L/m²/h/bar, or from 0.5 to 70 L/m²/h/bar, or from 0.5 to 50 L/m²/h/bar, or from 1 to 70 L/m²/h/bar, or from 1 to 50 L/m²/h/bar, or from 1 to 40 L/m²/h/bar, or from 1 to 30 L/m²/h/bar, or from 1 to 25 L/m²/h/bar, or from 1 to 20 L/m²/h/bar, or from 1 to 15 L/m²/h/bar, or from 1 to 10 L/m²/h/bar, or from 1 to 7 L/m²/h/bar, or from 1 to 5 L/m²/h/bar, or from 1 to 3 L/m²/h/bar. The throughput through a membrane is also referred to as "membrane flux" or "permeance". Permeate flux describes the quantity of the permeate produced during membrane separation per unit of time and membrane area. The flux is measured in volume per square meters per hour per bar.

The process of the invention may comprise a further step:
iv) Splitting the second composition into a solid phase comprising the vinyl halide polymer and a recovered organic phase; whereby the vinyl halide polymer has lower content of organic phase than the recovered organic phase.

The splitting in step iv) can be achieved by a single splitting step, or by a sequence of multiple splitting steps. That is, when another splitting follows to a first splitting, and so on. In this event, it is preferred to combine all portions of vinyl halide polymer obtained in these splitting steps on the one side, and all organic phase portions to a combined recovered organic phase. The splitting in step iv) might be considered complete when about no, that is a maximum of 5 wt.%, for example 1 wt.% or less of liquid organic phase remains with the vinyl halide polymer any more.

The splitting of step iv) can be made by any means and techniques known to and considered useful by a skilled person to be employed in the present process. For example, the organic phase and the vinyl halide polymer may be separated by freeze drying or distillation of the organic phase. Other examples for splitting techniques are precipitation, centrifugation, removal of organic phase in vacuo, flash drying, fluid bed drying, and stripping (steam extraction).

The process of the invention may comprise a further step:
v) Splitting the first composition into a solid or liquid phase comprising the additives and a recovered organic phase via nanofiltration.

The splitting in step v) can be achieved by a single splitting step, or by a sequence of multiple splitting steps. That is, when another splitting follows to a first splitting, and so on. In this event, it is preferred to combine all portions of additives containing phase obtained in these splitting steps on the one side, and all organic phase portions to a combined recovered organic phase.

The splitting of step v) can be made by any means and techniques known to and considered useful by a skilled person to be employed in the present process. For example, the organic phase and the additives may be separated by freeze drying or distillation of the organic phase. For example, a further membrane separation could be employed to split the first composition into additives and recovered organic solvent. A suited membrane for this purpose may be a Teflon AF2400/polyethylene membrane having a MWCO of about 150 g/mol and a solvent permeance of 3-8 L/m²/h/bar, as described in the Journal of Membrane Science, 602, p. 117972 (https://doi.org/10.1016/j.memsci.2020.117972).

In a further embodiment of the process according to the first aspect of the invention, the process is designed and/or operated as a continuous process. In this case, the plastic composition and the liquid organic phase in step i) are provided in form of feed streams. These two feed streams are combined to dissolve the plastic composition in step ii) at least partially in the liquid organic phase, whereby a single stream of a base composition is formed, also referred to as base stream. That base stream is divided in step iii) into a first sub-stream comprising a first composition and a second sub-stream comprising a second composition by a membrane, wherein the second sub-stream has a higher content of the vinyl halide polymer than the first sub-stream. This dividing can be repeated with the second sub-stream using another membrane of the same kind as before, wherein a resulting sub²-stream has an even higher content of the vinyl halide polymer etc. Subsequently, the resulting second sub-stream comprising the vinyl halide polymer can be subjected to a splitting step iv), in which a solid phase comprising the vinyl halide polymer and a recovered organic phase are obtained, wherein the vinyl halide polymer has a lower content of additives that the initial plastic composition. Similarly, the first composition can be further split into a phase (solid or liquid) comprising the additives and a recovered organic phase. Further description regarding the dividing in step iii), and the splittings of step iv) and v) and the compositions obtained thereby can be transferred in analogy to the streams and products obtained in the continuous process. Similarly, the same membranes as described before can be used.

In another embodiment of the invention according to the first aspect the recovered organic phase is at least partially reused after performing the process by providing the recovered organic phase again as liquid organic phase in step i). This applies to both continuous and batch operation. For example, the liquid organic phase in step i) comprises an amount of at least 90, or 95 Vol.% of recovered organic phase. Ideally, the liquid organic phase in step i) is composed about fully, or 99 to 100 Vol% by recovered organic phase. This is also referred to as a "closed loop process". The Vol% in this context referring to the total amount of liquid organic phase present in step i).

Preferably, the vinyl halide polymer made by the process according to the first aspect of the invention is obtained in solid state. However, sometimes, this vinyl halide polymer may comprise up to 10 wt.% of liquid organic phase, e.g. solvent. For example, the resulting vinyl halide polymer may comprise from 2 to 5 wt.% of liquid organic phase. The amount of liquid organic phase with respect to the total amount of vinyl halide polymer.

Preferably, the vinyl halide polymer made by the process according to the first aspect of the invention comprises less than 10'000 ppm of additives. For example, in the range from 1'000 to 5'000 wt.% additives. The amount of additives with respect to the total amount of vinyl halide polymer.

Preferably, the vinyl halide polymer made by the process according to the first aspect of the invention comprises less than 1'000 ppm of per additive. For example, in the range from 100 to 500 ppm per additive. The amount of additive with respect to the total amount of vinyl halide polymer.

Preferably, in the process according to the first aspect of the invention, the liquid organic phase in step i), or step iii), or both comprises less than 40 wt.% of water, based on the total amount of liquid organic phase, for example 30 wt.% or less, or 20 wt.% or less, or 10 wt.% or less water. Often at least a bit of water, e.g. 0.1 wt.% are present in the liquid organic phase. The amount of water in a liquid organic phase can be determined by Karl-Fischer-Titration.

The vinyl halide polymer made by the process according to the first aspect of the invention may have at least 10 times less, for example at least 20 times less, at least 50 times less, at least 100 times less, for example from 10 to 1'000 -times, or from 10 to 100-times, or from 20 to 100-times less additives, per additive substance, than the plastic composition. The amount of additives in the vinyl halide polymer is based on the amount of vinyl halide polymer. The amount of additives in the plastic composition is given with respect to the amount of vinyl halide polymer therein.

The vinyl halide polymer made by the process according to the first aspect of the invention may have a content of less than 0.1 wt.%, for example less than 0.08, 0.06, 0.05, 0.04, 0.03, 0.02 or less than 0.01 wt.% of constituents other than vinyl halide polymer, so-called additives, the wt.-% with respect to the total amount of vinyl halide polymer and other constituents. Often a content of 99.9 wt.% vinyl halide polymer is not exceeded.

The vinyl halide polymer made by the process according to the first aspect of the invention may have a content of less than 0.1 wt.%, for example less than 0.08, 0.06, 0.05, 0.04, 0.03, 0.02 or less than 0.01 wt.% of non-polymeric constituents, the wt.-% with respect to the total amount of vinyl halide polymer and non-polymeric constituents. Often a content of 99.9 wt.% vinyl halide polymer is not exceeded.

The vinyl halide polymer made by the process according to the first aspect of the invention may have a content of more than 99 wt.%, for example more than 99.2, 99.4, 99.5, 99.6, 99.7, 99.8 or even more than 99.9 wt.% of non-polymeric constituents, the wt.-% with respect to the total amount of vinyl halide polymer and non-polymeric constituents. Often a content of 99.9 wt.% vinyl halide polymer is not exceeded.

Preferably, the vinyl halide polymer made by the process according to the first aspect of the invention may have at least 10 times less, for example at least 20 times less, at least 50 times less, at least 100 times less, for example from 10 to 1'000 -times, or from 10 to 100-times, or from 20 to 100-times lead than the plastic composition. The amount of lead in the vinyl halide polymer is based on the amount of vinyl halide polymer. The amount of lead in the plastic composition is given with respect to the amount of vinyl halide polymer therein. Lead content can be determined by ICP-OES, see test method's section.

Sources of lead in the vinyl halide polymer and/or the plastic composition can be for example tribasic lead sulfate, dibasic lead phosphite, dibasic lead stearate, normal lead stearate, dibasic lead phthalate, and the like, as well as combinations of two or more thereof.

Preferably, the vinyl halide polymer made by the process according to the first aspect of the invention may have a content of less than 0.1 wt.%, for example less than 0.08, 0.06, 0.05, 0.04, 0.03, 0.02 or less than 0.01 wt.% of lead, the wt.-% with respect to the total amount of vinyl halide polymer. Often a content of 99.9 wt.% vinyl halide polymer is not exceeded. The remainder to 100 wt.% is - besides of lead - further constituents, such as additives. Lead content can be determined by ICP-OES, see test method's section.

Preferably, the vinyl halide polymer made by the process according to the first aspect of the invention may have at least 10 times less, for example at least 20 times less, at least 50 times less, at least 100 times less, for example from 10 to 1'000 -times, or from 10 to 100-times, or from 20 to 100-times less di(2-ethylhexyl) phthalate (DEHP) than the plastic composition. The amount of DEHP in the vinyl halide polymer is based on the amount of vinyl halide polymer. The amount of DEHP in the plastic composition is given with respect to the amount of vinyl halide polymer therein. The amount of DEHP is determined by using HPLC with a mass spectrometer coupled thereto.

Preferably, the vinyl halide polymer made by the process according to the first aspect of the invention may have a content of less than 0.1 wt.%, for example less than 0.08, 0.06, 0.05, 0.04, 0.03, 0.02 or less than 0.01 wt.% of DEHP, the wt.-% with respect to the total amount of vinyl halide polymer. Often a content of 99.9 wt.% vinyl halide polymer is not exceeded. The remainder to 100 wt.% is - besides of DEHP - further constituents, such as additives.

A second aspect of the invention is a vinyl halide polymer obtainable by a process as described regarding the first aspect of the invention or one or more of the embodiments relating thereto. Features and description relating to the first aspect of the invention and its embodiments are also applicable to the second aspect.

In an embodiment to the second aspect, the vinyl halide polymer comprises less than 0.1 wt.%, for example less than 0.08, 0.06, 0.05, 0.04, 0.03, 0.02 or less than 0.01 wt.% of constituents other than vinyl halide polymer, so-called additives, the wt.-% with respect to the total amount of vinyl halide polymer and other constituents. Often a content of 99.9 wt.% vinyl halide polymer is not exceeded.

A third aspect of the invention is an article comprising a vinyl halide polymer obtainable by the process according to the first aspect of the invention or any one of its embodiments. Features and description relating to the first aspect of the invention and its embodiments are also applicable to the second aspect.

The article can be of any kind known to and considered suited by a skilled person. For example, the article may be selected from the group consisting of a fiber, a filament, a textile, a film and a formed body, such as pipe, tube or profile, or an object of more complex geometrical shape.

A fourth aspect of the invention is a use of the vinyl halide polymer in an article, wherein the vinyl halide polymer is obtained by the process according to the first aspect of the invention or any one of its embodiments. Features and description relating to the first aspect of the invention and its embodiments are also applicable to the fourth aspect.

A fifth aspect of the invention is a use of a membrane for removing additives from an organic liquid comprising at least one vinyl halide polymer. Description regarding the first aspect, in particular description related to the membrane and the process is also applicable to the fifth aspect. This aspect includes also a use of a membrane in a process of making a poly vinyl halide polymer, as described in the first aspect and its embodiments. Again, features and description relating to the first aspect of the invention and its embodiments are also applicable to this aspect.

A sixth aspect of the invention is a use of a membrane for improving the purity of at least one vinyl halide polymer. This may be achieved conducting the process of the first aspect. Accordingly, description regarding the first aspect, in particular description related to the membrane and the process is also applicable to the fifth aspect. This aspect includes also a use of a membrane in a process of making a poly vinyl halide polymer whereby the purity of the vinyl halide polymer is improved. The process may be the one described in the first aspect and its embodiments. Again, features and description relating to the first aspect of the invention and its embodiments are also applicable to this aspect.

A seventh aspect of the invention is a use of a membrane for treating an liquid organic phase comprising at least one vinyl halide polymer. Description regarding the first aspect, in particular description related to the membrane and the process is also applicable to the fifth aspect. This aspect includes also a use of a membrane in a process of making a poly vinyl halide polymer for treating an liquid organic phase, as described in the first aspect and its embodiments. Again, features and description relating to the first aspect of the invention and its embodiments are also applicable to this aspect.

### FIGURES

The invention is illustrated below by means of figures by way of example. The figures are not to scale and are not intended to limit the invention.
- Fig. 1: is a schematic presentation of the process according to first aspect of the invention.
- Fig. 2: is a schematic presentation of an embodiment of the first aspect of the invention including a step iv), i.e. with solvent recovery
- Fig. 3: is a schematic presentation of an embodiment of the first aspect of the invention including recovery of the organic phase and reuse in a closed loop.
- Fig. 4: shows a setup of a batch process of the invention.
- Fig. 5: shows a variant of the process with step iii) being multiple membrane separation steps.

### DESCRIPTION OF THE FIGURES

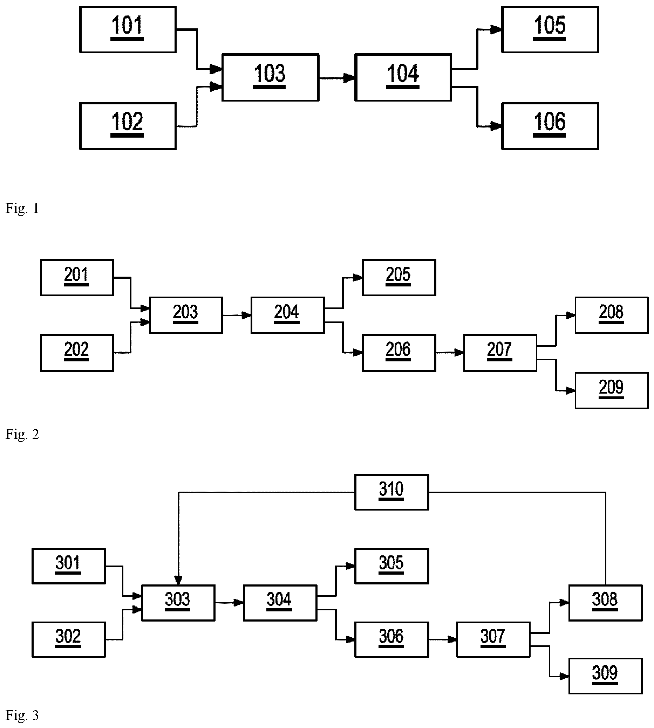

**Fig. 1** shows a schematic presentation of the process of the invention **100.** First, an organic phase **102** and milled scrap plastic composition incl. additives **101,** such as PVC waste from electrical wire insulation or construction materials like window frames, are provided in step i) and dissolved to give a base composition (no reference) in a step ii) **103.** The base composition is divided in step iii) **104** to give a 1^{st} composition **105** including organic phase and additives and a 2^{nd} composition **106** comprising organic phase and purified vinyl halide polymer.

**Fig. 2** shows a schematic presentation of the process of the invention **200.** First, an organic phase **202** and milled scrap plastic composition incl. additives **201,** such as PVC waste from electrical wire insulation or construction materials like window frames, are provided in step i) and dissolved to give a base composition (no reference) in a step ii) **203.** The base composition is divided in step iii) **204** to give a 1^{st} composition **205** including organic phase and additives and a 2^{nd} composition **206** comprising organic phase and purified vinyl halide polymer. 2^{nd} composition **206** is split in step iv) into a solid phase of purified vinyl halide polymer **209** and recovered organic phase **208.**

**Fig. 3** shows a schematic presentation of the process of the invention **300.** First, an organic phase **302** and comminuted scrap plastic composition incl. additives **301,** such as PVC waste from electrical wire insulation or construction materials like window frames, are provided in step i) and dissolved to give a base composition (no reference) in a step ii) **303.** The base composition is divided in step iii) **304** to give a 1^{st} composition **305** including organic phase and additives and a 2^{nd} composition **306** comprising organic phase and purified vinyl halide polymer. 2^{nd} composition **306** is split in step iv) into a solid phase of purified vinyl halide polymer **309** and recovered organic phase **308.** The recovered phase **308** is fed via line **310** and optional solvent purification steps (not shown here) back into dissolution step ii) **303.**

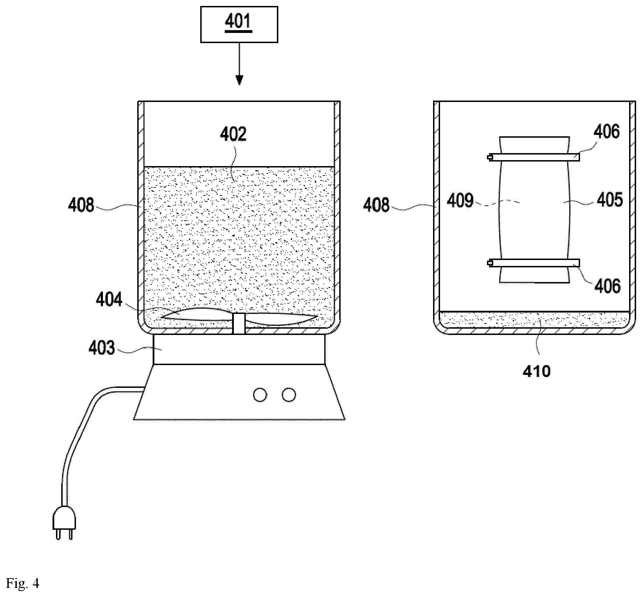

**Fig. 4** shows a batch process for making a vinyl halide polymer from scrap material containing vinyl halide polymer. In (1), a beaker **408** is placed on a electric stirrer with heat plate **403.** An agitator fish **404** is put in the beaker and organic phase **402** poured (step i) in the beaker **408.** Pieces of scrap plastic composition **401** are added (step i) and the whole is stirred until most of the plastic pieces are dissolved (step ii) thereby forming the base composition **409.**

Not shown: base composition **409** is filled into a membrane tubing **405** and sealed with clamps **406** on both ends of the tubing. The filled tubing **405** is placed in (2) in a beaker, large enough to host tubing **405.** Permeate **410** forms with time containing additives and the like. A concentrate obtained from inside the tubing **405** is evaporated whereby solid and purified vinyl halide polymer is obtained (not shown).

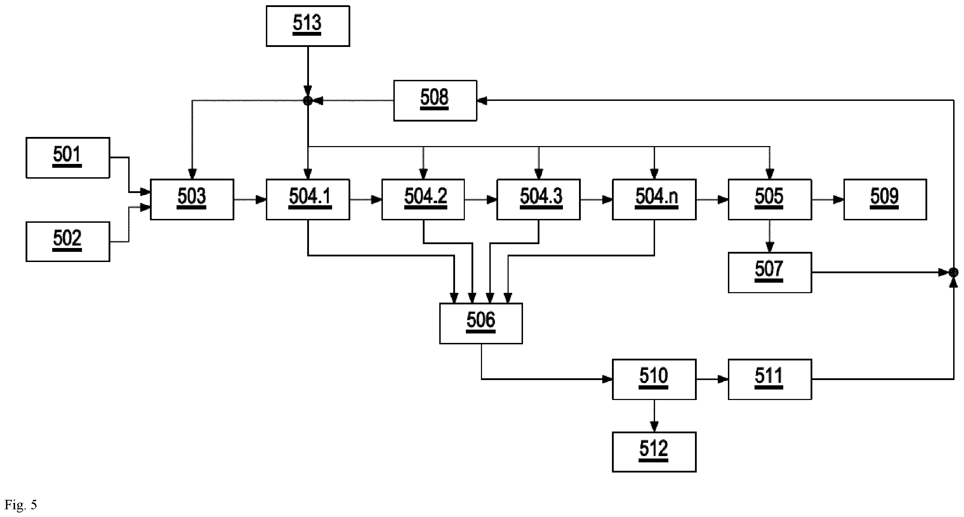

**Fig. 5** shows a variant of the process of the invention with step iii) being multiple membrane separation steps. First, an organic phase **502** and milled scrap plastic composition incl. additives **501,** such as PVC waste from electrical wire insulation or construction materials like window frames, are provided in step i) and dissolved to give a base composition (no reference) in a step ii) **503.** The base composition is divided in step iii) **504.1** to give an intermediate composition including organic phase and PVC and less additives than before which is fed into divider **504.2,** and so on (up to **504.n**). Fractions **506.1 ... 506.n** (not shown here) are combined to give a 1^{st} composition **506** comprising organic phase and additives. 1^{st} composition **506** is split in step v) **510** into a phase comprising mostly additives **512** and recovered organic phase with almost no additives **511.** Divider **504.n** gives also a so-called 2^{nd} composition which is split in a step iv) into purified PVC **509** (= product) and recovered organic phase practically with no PVC **507.** Recovered phases **507** and **511** are combined, fed via line **310** and optional solvent purification steps (not shown here) back into dissolution step ii) **503.** After each step **504.n,** the PVC containing phase may be diluted with recycled or native liquid organic phase **513** in order to reduce the viscosity and to prepare the next step of dividing.

### TEST METHODS

### [A] Molecular weight of vinyl halide polymer

The number averaged molecular weight of a sample of a vinyl halide polymer is determined using a calibrated GPC (gel permeation chromatography), running THF as mobile phase at a flux of 0.4 ml/min at 40 °C. The eluate signal was recorded using a refractive index analyzer. The technical equipment used was an EcoSEC Ambient Temperature System, equipped with one TSKgel SuperH4000 and a SUPERH3000 column with 6.0 mm ID×15 cm L, 3 µm particle size. Detector, pump oven and column oven were maintained at 40 °C.

### [B] Metal analysis

Metal analysis is performed by ICP-OES (Inductively coupled plasma - optical emission spectrometry). For the ICP-OES analysis, a melting procedure is performed using addition of H₂SO₄, LiBO₂ and heating up the sample. After addition of water and HCl, the sample is analyzed by ICP-OES.

### [C] Plasticizer analysis

Plasticizer analysis was performed in double by a Soxhlet extraction using MTBE as solvent during at least 8h (2x1.5g PVC material; ±150ml methyl tert-butyl ether bp=55°C). The amount of extract (%) is determined gravimetrically. The extract is analyzed by NMR, HPLC-MS and GC-MS to identify and quantify the plasticizers.

### EXAMPLES

The invention is further illustrated by examples below. The invention is not limited to the examples.

### Example 1

50 g of PVC K-value 70 with *Mₙ* of 50'000 g/mol and M_{w} of 97'000 g/mol and 25g di(2-ethylhexyl) phthalate plasticizer (DEHP) was dissolved in 925g methyl ethyl ketone (MEK) by stirring at 79°C during 2 hrs. The resulting feed liquid was passed over an Alfa-Laval ETNA10PP membrane (MWCO 10 kDa) at room temperature. The remaining solvent MEK in the retentate was removed by evaporation and resulted in a PVC film containing some DEHP. The remaining solvent MEK in the permeate bottle was removed by evaporation and gave a drop of DEHP. This demonstrates that PVC is fully retained by the membrane and DEHP and solvent MEK passes the membrane.

**REFERENCE NUMERALS**

| | | | |
|---|---|---|---|
| 100 | Separation process I | 400 | Separation, Batch process |
| 101 | Plastic composition incl. additives | 401 | plastic composition |
| 102 | Organic phase | | |
| 103 | Dissolving 101 in 102 | 402 | Organic phase |
| 104 | separation into 104 and 105 | 403 | Stirrer with heat plate |
| 105 | 1^{st} composition (organic phase and | 404 | agitator fish |
| | additives) | 405 | Membrane (tubing) |
| 106 | 2^{nd} composition (vinyl halide poly- | 406 | Clamp |
| | mer and organic phase) | 407 | Base composition |
| 200 | Separation process II | 408 | beaker |
| 201 | Plastic composition incl. additives | 409 | Base composition |
| 202 | Organic phase | 410 | permeate |
| 203 | Dissolving 201 in 202 | 500 | Separation process III |
| 204 | separation into 204 and 205 | 501 | Plastic composition incl. additives |
| 205 | 1^{st} composition (organic phase and additives) | 502 503 | Organic phase Dissolving 501 in 502 |
| 206 | 2^{nd} composition (vinyl halide polymer and organic phase) | 504.n | separation into 506 and 504.n with - n=n+1 |
| 207 | Splitting into 208 and 209 | 504.n | |
| 208 | Recovered organic phase | 505 | Separation into 507 and 509 |
| 209 | Vinyl halide polymer (solid) | 506 | Combined 1^{st} composition (organic |
| 300 | Separation process III | | phase with additives) |
| 301 | Plastic composition incl. additives | 507 | Recovered organic phase |
| 302 | Organic phase | 508 | Line to 503, optional purification (not |
| 303 | Dissolving 301 in 302 | | shown here) |
| 304 | separation into 304 and 305 | 509 | purified product |
| 305 | 1^{st} composition (organic phase and | 510 | Dividing into 511 and 512 |
| | additives) | 511 | Recovered organic phase |
| 306 | 2^{nd} composition (vinyl halide poly- | 512 | Additives (waste) |
| | mer and organic phase) | 513 | Feed of organic phase |
| 307 | Splitting into 308 and 309 | | |
| 308 | Recovered organic phase | | |
| 309 | Vinyl halide polymer (solid) | | |
| 310 | Line to 303, optional purification (not shown here) | | |

## Claims

1. A process of making a vinyl halide polymer comprising at least these steps:
i) Providing:
a plastic composition, wherein the plastic composition comprises at least 10 wt.% of the vinyl halide polymer and one or more additives; and
a liquid organic phase;
ii) Dissolving the plastic composition in the liquid organic phase at least partially, thereby forming a base composition;
iii) Dividing the base composition into a first composition and a second composition;
wherein the first composition has a higher content of additives than the second composition; and
wherein the second composition has a higher content of the vinyl halide polymer than the first composition;
wherein the dividing in step iii) is made by a membrane.

2. The process of claim 1, further comprising this step:
iv) Splitting the second composition into a solid phase comprising the vinyl halide polymer and a recovered organic phase;
whereby the vinyl halide polymer has lower content of additives than the plastic composition.

3. The process of any one of the preceding claims, wherein the membrane has a molecular weight cut-off (MWCO) in the range from 3 to 50 kDa.

4. The process of any one of the preceding claims, wherein the membrane in step iii) comprises at least one of the polymers selected from the group consisting of polyolefine, polysulfone, polyethersulfone, fluoro polymer, polystyrene, polyimide, poly(vinylidene fluoride), cellulose, cellulose nitrate, cellulose acetate, poly(acrylonitrile), poly(vinyl alcohol), poly (methacrylic acid), poly (methacrylic acid ester), poly(arylene ether ketone), poly(ether imide), polyaniline nanoparticles, poly(arylene ether sulfone) Polyether ether ketone, fluoro polymer, polypiperazinamide and polyethersulfone amide, and combinations thereof.

5. The process of any one of the preceding claims, wherein the organic phase is at least partially removed from the first composition, from the second composition or from both, whereby a recovered organic phase is obtained.

6. The process of any one of the preceding claims, wherein the recovered organic phase is at least partially reused by providing as liquid organic phase in step i).

7. The process of any one of the preceding claims, wherein the vinyl halide polymer comprises less than 1'000 ppm of additives, with respect to each additive.

8. A vinyl halide polymer obtainable by a process according to any of the preceding claims.

9. The vinyl halide polymer according to claim 8 comprising less than 1'000 ppm of additives per additive substance.

10. An article comprising a vinyl halide polymer as in claims 8 or 9, or one obtainable by the process according to any one of claims 1 to 7.

11. The article according to claim 10, wherein the article is selected from the group consisting of fiber, a filament, a textile, a film and a formed body, such as pipe, tube or profile, or an object of more complex geometrical shape.

12. Use of the vinyl halide polymer in an article, wherein the vinyl halide polymer is obtained by the process according to any one of claims 1 to 23.

13. Use of a membrane for removing additives from an organic liquid comprising at least one vinyl halide polymer.

14. Use of a membrane for improving the purity of at least one vinyl halide polymer.

15. Use of a membrane for treating a liquid organic phase comprising at least a vinyl halide polymer.
